# FASCICULE DE BREVET EUROPEEN

(11) **EP 0 521 415 B1**
(45) Date de publication et mention de la délivrance du brevet: **15.11.1995**
(21) Numéro de dépôt: 92110878.3
(22) Date de dépôt: 26.06.1992
(51) Int. Cl.: B31F 1/20, F16J 15/16

(54) **Dispositif d'étanchéité pour un caisson de pressurisation au sein d'une machine rotative**
Abdichtung eines Druckraums gegen einen rotierenden Teil einer Maschine
Seal for a pressurized chamber against a rotating element of a machine

(30) Priorité: 01.07.1991 CH 1946/91
(43) Date de publication de la demande: 07.01.1993
(73) Titulaire: PETERS MASCHINENFABRIK GmbH, 22525 Hamburg (DE)
(72) Inventeur: Hoffmann, Martin, W-2081 Tangstedt-Wilstedt (DE); Palles, Dieter, W-2359 Lentfoehrden (DE)
(74) Mandataire: Colomb, Claude

(56) Documents cités:
- WO-A-86/05252
- DE-A- 2 938 484
- DE-A- 3 429 708
- FR-A- 2 330 926
- US-A- 2 672 640
- US-A- 4 261 784

## Description

La présente invention est relative à un dispositif d'étanchéité pour un caisson de pressurisation au sein d'une machine rotative, et notamment d'une machine de fabrication de carton ondulé.

Dans une telle machine, on fait passer une feuille de carton entre une paire de rouleaux cannelés superposés tournant dans des sens opposés afin d'onduler la feuille de carton. On applique de la colle au sommet des ondulations de la feuille de carton au moyen d'un rouleau d'encollage tout en maintenant la feuille de carton en contact avec le rouleau inférieur cannelé. Puis, on couvre la feuille de carton encollée d'une feuille de parement amenée au moyen d'un cylindre presseur distinct tournant également dans le sens opposé à celui du rouleau inférieur cannelé.

Il est essentiel, pour la bonne qualité du carton produit, que le papier cannelé formé reste en contact permanent avec les cannelures du rouleau inférieur pendant l'encollage, et ce jusqu'à la jonction avec le papier de parement, donc jusqu'au cylindre presseur inférieur. Une solution actuelle consiste à enfermer le dispositif d'encollage ainsi que la partie postérieure des rouleaux inférieur et supérieur cannelés et du cylindre presseur dans un caisson à l'intérieur duquel on établit une surpression qui plaque donc les papiers contre leur rouleau ou cylindre correspondant. Il se pose alors le problème de l'étanchéité sur toute une longueur entre un cylindre tournant et le bord latéral en vis-à-vis du caisson. Dans une solution actuelle, la partie du caisson située en face du cylindre presseur comprend une paroi en forme de portion de cylindre qui est articulée en son bord inférieur à un axe situé en-dessous du cylindre presseur, paroi venant donc envelopper ce cylindre presque jusqu'à son point de contact avec le rouleau cannelé. Cette paroi en forme de portion de cylindre, renforcée par des nervures verticales en arc de cercle et/ou des traverses horizontales, peut être plus ou moins rapprochée du cylindre presseur par des moyens de pression, par exemple des vis de déplacement. Un tel dispositif est décrit en détail dans le brevet US-A-4,261,784. Dans la pratique, pour réaliser une meilleure étanchéité dans cette zone, on a imaginé de prolonger le bord supérieur de cette paroi par une languette latérale en un matériau souple tel que celui vendu sous la dénomination "Téflon". Cette languette est oblique orientée vers l'extérieur par rapport à la paroi. Ainsi, lorsque l'on avance cette paroi, la languette souple vient en contact tangentiel avec le cylindre presseur, et ce très proche du point de contact entre ce cylindre et le rouleau inférieur cannelé, donc peu avant que la feuille de parement ne vienne en contact avec le papier ondulé formé. La surpression à l'intérieur du caisson tend à plaquer dans une certaine mesure la languette souple contre le cylindre presseur pour améliorer l'étanchéité.

Toutefois, à l'usage, on constate que cette languette d'étanchéité s'use de manière inégale sur toute sa longueur provoquant des fuites de pression non négligeables. Surtout, l'étanchéité étant imparfaite, de l'air en turbulence peut se retrouver de part et d'autre de la languette proche du cylindre tournant ce qui induit des vibrations dans cette languette se traduisant par un sifflement très fort particulièrement désagréable pour les opérateurs devant se tenir autour de la machine.

De manière analogue, le bord latéral supérieur du caisson, situé en face du rouleau cannelé supérieur, est complété par une plaque latérale montée sur charnières et orientée obliquement vers le bas, laquelle plaque porte sur sa longueur un joint d'étanchéité sous la forme d'une barrette latérale de Téflon. Ainsi, en levant la plaque par des moyens sous-jacents, on peut appliquer cette barrette d'étanchéité de Téflon contre les cannelures de ce rouleau supérieur. Des ressorts inclus dans les moyens de lever autorisent les petites variations de diamètre des rouleaux cannelés dues à leur type de cannelures. La barrette présente également une certaine largeur et une surface de contact bombée pour compenser les petits mouvements de translation du rouleau cannelé supérieur par rapport au rouleau cannelé inférieur, mouvements intrinsèques au fonctionnement de la machine.

Comme on peut aisément le comprendre, la dureté nécessaire du Téflon pour assurer l'étanchéité ne peut atténuer les vibrations bruyantes générées lors du frottement de la barrette contre les cannelures. Par ailleurs, l'usure inégale de la surface de contact provoque également des fuites de pression indésirables.

Le but de la présente invention est un dispositif d'étanchéité pour un caisson de pressurisation au sein d'une machine rotative, dispositif comprenant un joint d'étanchéité disposé entre la bordure fixe d'une paroi et un cylindre tournant en vis-à-vis, ce joint devant s'user beaucoup plus lentement et d'une manière plus régulière afin d'assurer en permanence une étanchéité efficace, et ce tout le long d'un bord latéral, même sur des machines particulièrement larges. Egalement, la conception et la disposition des pièces constitutives doivent être telles que les éventuelles vibrations induites ne puissent plus engendrer de bruits excessifs.

Ces buts sont réalisés grâce à un dispositif d'étanchéité entre un cylindre tournant et le bord en vis-à-vis d'une paroi d'un caisson de pressurisation au sein d'une machine rotative comprenant un joint d'étanchéité fixé par sa longueur tout le long du bord qui est parallèle à l'axe de rotation du cylindre, la paroi étant déplaçable en direction du cylindre par des moyens de pression afin d'appliquer le joint contre le cylindre, et ce du fait que ce joint se présente sous la forme d'au moins une brosse longitudinale dont les poils sont réalisés en un matériau relativement souple et réfractaire, et dans lesquelles les poussières retenues constituent un feutrage améliorant l'étanchéité. Avantageusement, les poils constituant la brosse sont réalisés en un matériau commercialisé sous la marque "Nylon".
Des essais en atelier ont montré que de nombreuses particules de poussières toujours présentes dans une telle machine viennent se prendre dans les poils de la brosse pour former un feutrage confirmant l'étanchéité initiale de la brosse vis-à-vis de la surpression interne du caisson. Ce feutrage n'altère en rien l'élasticité de la brosse, laquelle élasticité autorise un écartement du joint lors du passage de sur-épaisseurs éventuelles du papier de couverture, le passage de papier de différentes épaisseurs sans modification du réglage de la position du support de joint, ainsi que l'introduction aisée du début du papier lors du démarrage de la machine.

Avantageusement, le joint d'étanchéité peut être formé de deux brosses proches et parallèles agissant à la manière d'un labyrinthe pour maintenir en deux étapes la surpression. Un tel joint double permet également, par sa plus grande surface de contact, de compenser d'éventuels mouvements du cylindre par rapport au bord du caisson, ou inversement.

Lorsque la paroi supportant le joint vis-à-vis du cylindre presseur se présente sous la forme d'une portion de cylindre articulée en son bord inférieur à un pivot, il peut être avantageux que l'angle au sommet définissant la section transversale en arc de cercle de la paroi soit réduite à une valeur comprise entre 45 et 75 degrés, mais en tout cas suffisante pour amener le joint au-dessus de la ligne reliant le centre de rotation du cylindre presseur et le centre de rotation du levier de positionnement de ce rouleau. Lorsque le cylindre presseur est en position abaissée, l'introduction de la feuille est facilitée par l'agrandissement de la fente entre le joint et le cylindre presseur. Le joint en forme de brosse peut faire, avec le rayon du cylindre passant par le point de contact, un angle compris entre 10 et 45 degrés, de préférence 25 degrés, orienté dans le sens de rotation du cylindre. Les moyens de pression du joint contre le cylindre agissent de préférence en un point situé entre un tiers et un quart de la longueur de l'arc de cercle de la paroi à partir du bord supérieur supportant ce joint. De cette manière, les vibrations induites dans le dispositif par le cylindre tournant contre le joint sont réduites une fois de plus, diminuant d'autant les sources potentielles de bruit.

Lorsque le joint d'étanchéité est fixé sur une plaque oblique vers le bas qui est reliée par des charnières au bord latéral supérieur du caisson en vis-à-vis du rouleau cannelé supérieur, ce joint peut être constitué d'une double brosse dirigée sensiblement perpendiculairement au rouleau.

L'invention sera mieux comprise à l'étude de modes de réalisation au sein d'une machine à fabriquer du carton pris à titre d'exemples nullement limitatifs et représentés sur les figures annexées dans lesquelles :
- la figure 1 illustre une vue en coupe schématique d'un premier mode de réalisation appliqué au cylindre presseur, et
- la figure 2 illustre une vue en coupe schématique d'un second mode de réalisation appliqué au rouleau cannelé supérieur.

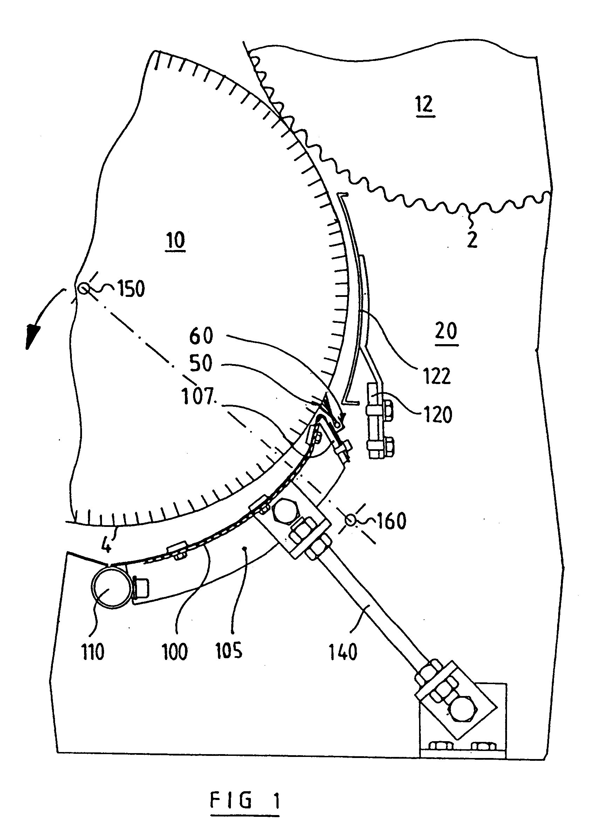

Sur la figure 1 est illustré partiellement un rouleau inférieur cannelé 12 en contact avec un cylindre presseur 10. Une première feuille de papier 2 a été ondulée par forçage dans les cannelures du rouleau inférieur 12, et les crêtes, du papier cannelé 2 ont été encollées par un dispositif non représenté ici. Un papier de parement 4 est amené par rotation autour du cylindre presseur 10 en contact contre les crêtes du papier ondulé 2 auquel il adhère. Afin de favoriser le placage du papier cannelé 2 contre le rouleau inférieur 12, la partie postérieure du cylindre 10, du rouleau inférieur cannelé 12, ainsi que la partie postérieure du rouleau supérieur cannelé et du dispositif d'encollage non représenté, sont réunies dans un caisson 20 dans lequel règne une surpression. Pour une meilleure clarté de la figure 1, seule la paroi 100 du caisson proche du cylindre presseur 10 a été représentée. L'étanchéité entre deux cylindres est assurée par leur contact serré. Par contre, il convient de prévoir un dispositif d'étanchéité spécial entre le cylindre tournant 10 et le bord 107 en vis-à-vis du caisson.

Tel qu'illustré, la paroi 100 proche du cylindre presseur 10 est en forme de portion de cylindre dont le bord inférieur est articulé autour du pivot horizontal 110 de telle sorte que l'on puisse amener, par pression arrière, le bord supérieur 107 garni d'un joint d'étanchéité 50 en contact avec ce cylindre 10. Cette paroi 100 peut avantageusement être structurée à l'arrière par des nervures 105 et/ou traverses. Plus particulièrement, selon l'invention, cette paroi mobile 100 présente des dimensions plutôt réduites toute proportion gardée afin de limiter l'amplitude d'oscillations internes potentielles. Toutefois, le bord supérieur 107 se situe en tous les cas au-dessus de la ligne reliant le centre de rotation 150 du cylindre presseur 10 et le centre de rotation 160 du levier de positionnement non représenté de ce cylindre presseur 10. En effet, il convient de toujours pouvoir abaisser ce cylindre presseur 10 sans devoir retoucher la position de la paroi 100. Tel qu'illustré, l'angle au sommet de l'arc de cercle définissant la section transversale de cette paroi 100 est compris entre 45 et 75 degrés, par exemple 60 degrés.

Le joint d'étanchéité 50 se présente ici sous la forme d'une brosse longitudinale montée dans un support 60 qui est lui fixé tout le long du bord 107 de la paroi 100. Cette brosse 50 est réalisée avec des poils en un matériau relativement souple mais également réfractaire pour supporter la chaleur générée par le frottement continu contre le cylindre presseur tournant. Avantageusement, les poils de cette brosse sont réalisés en un matériau commercialisé sous la dénomination "Nylon". La brosse 50 peut être inclinée par rapport au rayon du cylindre passant par son point de contact dans le sens de rotation du cylindre 12, et ce avec un angle compris entre 10 et 45 degrés.

A l'usage, on constate que des poussières de carton, toujours présentes dans une telle machine, viennent se prendre dans les poils de la brosse constituant alors un feutrage confirmant l'efficacité de l'étanchéité. De plus, de par la flexibilité inhérente à ce type de joint, il est possible de faire passer des papiers de parement de différentes épaisseurs sans modification du réglage de la position de la paroi 100 donc du bord 107 supportant le joint 50. De plus, toujours grâce à cette flexibilité, il est enfin possible d'introduire sans encombre l'extrémité du papier de parement lors de la mise en marche de la machine, ou de faire passer des sur-épaisseurs momentanées telles que des lignes de raccords entre deux rouleaux de papier de parement successifs.

On constate également que ce joint d'étanchéité 50 sous forme de brosse agit de manière silencieuse en éliminant les vibrations entre le cylindre tournant 10 et la paroi fixe 100 sources de bruits et de fatigue mécaniques pour ces composants, et supprime en plus tout risque de marques sur le papier par le joint. L'usure de la brosse s'avère lente et régulière assurant une étanchéité constante dans le temps.

Les moyens de pression 140 agissent en un point situé à environ un quart de la longueur de l'arc de cercle définissant la section transversale de la paroi 100 à partir du bord supérieur 107, c'est-à-dire plutôt proche de ce bord ce qui permet l'application plus précise d'une force de pression. Ces moyens de pression 140 sont constitués ici d'une tige filetée fixée, d'une part, dans une embase fixée au sol et, d'autre part, à une nervure 105 de la paroi 100 au moyen d'écrous. Ainsi, par rotation des écrous le long de la tige filetée, il est possible de repousser la paroi 100 plus ou moins fort contre le cylindre 10. Bien-entendu, d'autres moyens incluant des ressorts de compression pourraient également être utilisés.

La zone située entre le joint 50 et le point de contact entre le cylindre 10 et le rouleaux 12, préalablement protégés par une paroi beaucoup plus longue mais également en porte-à-faux, est ici entourée par un cache fixe 122 solidaire d'une traverse 120.

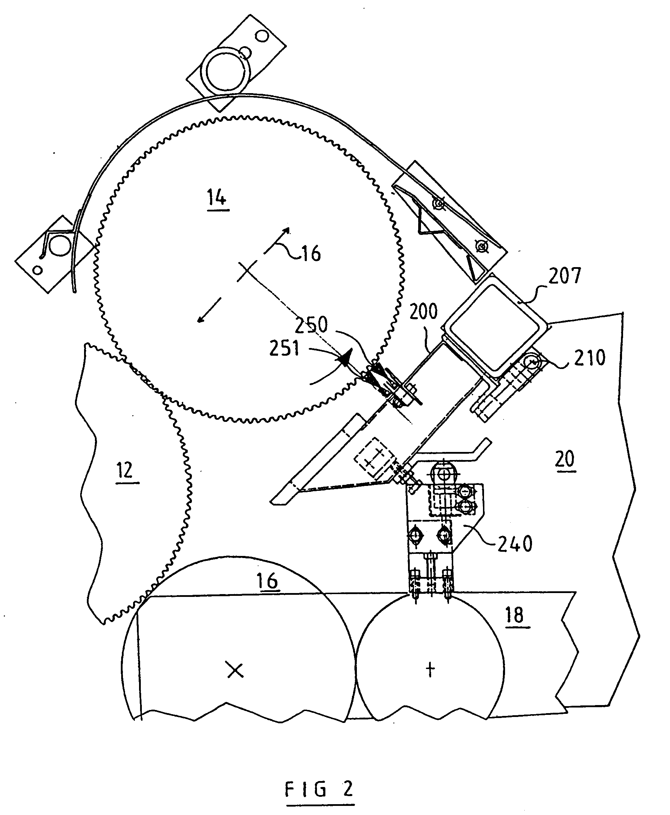

Sur la figure 2 sont illustrés un rouleau cannelé supérieur 14 engagé avec le rouleau cannelé inférieur 12 (déjà rencontré sur la figure 1, et ici également représenté seulement en partie), ainsi que le rouleau d'encollage 16 barbotant dans la cuve de colle 18. Le bord supérieur du caisson de pressurisation 20 est matérialisé par la traverse 207. Une plaque porte-joint 200 oblique vers le bas est reliée, mobile en rotation, par une série de charnières 210 à la traverse 207. Des moyens de lever 240 incluant des ressorts permettent de monter à volonté la plaque 200 en direction du rouleau cannelé 14, et ainsi d'appliquer de manière élastique le joint d'étanchéité contre ce rouleau 14.

Selon l'invention, le joint d'étanchéité pour la surpression d'air est constitué de deux brosses parallèles rapprochées 250 et 251 montées le long de la plaque 200, donc parallèlement au rouleau cannelé supérieur 14. Ces brosses sont toutes deux orientées vers le rouleau avec, éventuellement, un léger angle dans le sens de rotation de ce rouleau.

Cette configuration double permet d'abord de mieux maintenir la surpression par un effet de labyrinthe à deux étages, et ensuite de compenser les translations du rouleau supérieur 14 par rapport au rouleau inférieur 12 nécessaires au bon fonctionnement de la machine et représentées sur la figure 2 par les flèches 16. Enfin, ce type de joint en brosse permet également d'accommoder les faibles variations de diamètre dues aux différents types de cannelures possibles.

Bien que décrit dans le cadre d'une machine rotative pour la fabrication du carton ondulé, ce dispositif d'étanchéité peut être également appliqué dans toute autre machine comprenant un cylindre tournant proche d'un bord fixe d'un caisson de surpression. De nombreuses améliorations peuvent être apportées à ce dispositif dans le cadre de cette invention.

## Revendications

1. Dispositif d'étanchéité entre un cylindre tournant (10) et le bord en vis-à-vis (107) d'une paroi d'un caisson de pressurisation (20) au sein d'une machine rotative (de fabrication de carton ondulé) comprenant un joint d'étanchéité (50) fixé par sa longueur tout le long du bord (107) qui est parallèle à l'axe de rotation du cylindre (10), la paroi (100) étant déplaçable en direction du cylindre afin d'appliquer le joint (50) contre le cylindre (10), caractérisé en ce que le joint (50) se présente sous la forme d'au moins une brosse longitudinale dont les poils sont réalisés en un matériau relativement souple et réfractaire, de préférence en matière synthétique dans lesquels vient se prendre de la poussière de papier pour former un feutrage.

2. Dispositif selon la revendication 1, dans lequel le joint (50) est positionné sensiblement au-dessus de la ligne reliant le centre de rotation (150) du cylindre presseur (10) et le centre de rotation (160) du levier de positionnement de ce cylindre presseur (10).

3. Dispositif selon la revendication 1 ou 2 dont la paroi (100) supportant le joint d'étanchéité (50) en son bord supérieur (107) se présente sous la forme d'une portion de cylindre articulée en son bord inférieur à un pivot, caractérisé en ce que l'angle au sommet définissant la section transversale en arc de cercle de la paroi (100) est compris entre 45 et 75 degrés, et en ce que des moyens de pression (140) du joint contre le cylindre agissent en un point situé entre un quart et un tiers de la longueur de l'arc de cercle à partir du bord supérieur (107) supportant ce joint.

4. Dispositif selon la revendication 1 ou 2 dans lequel le joint est fixé sur une plaque reliée par des charnières à un bord latéral en vis-à-vis d'un rouleau cannelé, caractérisé en ce que le joint est constitué d'une double brosse (250,251) dirigée sensiblement perpendiculairement au rouleau.

## Claims

1. Tightening device situated between a rotary cylinder (10) and the opposite edge (107) of a wall of a pressure case (20) used in a rotary machine (producing corrugated board), comprising a tightening seal (50) fitted over its whole length along the edge (107) which is parallel to the rotation axis of the cylinder (10), the wall (100) being shiftable towards the cylinder so as to enable the seal (50) to be applied against the cylinder (10), characterized by the fact that the seal (50) has the shape of at least one lengthwise brush, whose bristles consist of a relatively flexible and refractory, preferably synthetic, material in which paper dust will gather in order to create a felting.

2. Device according to claim 1, on which the seal (50) is positioned considerably above the line connecting the rotation centre (150) of the pressing cylinder (10) and the rotation centre (160) of the positioning lever belonging to the pressing cylinder (10).

3. Device according to claim 1 or 2, whose wall (100) supporting the tightening seal (50) on its upper edge (107) appears in the form of a cylinder portion hinged at its lower edge on a stud, characterized by the fact that the angle of the top defining the crosswise arc-shaped section of the said wall (100) is contained between 45° and 75°, and that the means (140) for pressing the seal against the cylinder act at a point situated between a fourth or a third part of the arc length as measured from the upper edge (107) supporting the seal.

4. Device according to claim 1 or 2, on which the seal is fitted on a plate connected by the hinges to the lateral edge opposite the corrugated roller, characterized by the fact that the seal consists of a double brush (250, 251) directed almost perpendicularly to the roller.

## Patentansprüche

1. Dichtungsvorrichtung zwischen einem drehenden Zylinder (10) und dem gegenüberliegenden Rand (107) einer Wand einer Druckkammer (20) in einer Rotationsmaschine (zur Herstellung von Wellpappe) mit einer Dichtung (50), die auf der ganzen Länge des Randes (107) befestigt ist, welch letzterer parallel zur Rotationsachse des Zylinders (10) liegt, wobei die Wand (100) in der Richtung des Zylinders verschiebbar ist, damit die Dichtung (50) an den Zylinder (10) angedrückt werden kann, dadurch gekennzeichnet, dass die Dichtung (50) die Form wenigstens einer Längsbürste mit Borsten aus einem verhältnismässig weichen und abstossenden Material, vorzugsweise aus Kunststoff, in welchen sich Papierstaub verfängt und verfilzt, aufweist.

2. Vorrichtung gemäss Patentanspruch 1, bei welcher die Dichtung (50) beträchtlich oberhalb der Linie, das Rotationszentrum (150) des Presseurzylinders (10) und das Rotationszentrum (160) des Positioniershebels des besagten Presseurzylinders (10) verbindet, angeordnet ist.

3. Vorrichtung gemäss Patentanspruch 1 oder 2, deren Wand (100), welche die Dichtung (50) an ihrem oberen Rand (107) trägt, die Form eines Zylinderteils aufweist, der an seinem unteren Rand an einem Drehzapfen angelenkt ist, dadurch gekennzeichnet, dass der Spitzenwinkel, der den Querschnitt als Kreisbogen der Wand (100) definiert, zwischen 45 und 75 Grad liegt, und dass die Mittel (140) zum Anpressen der Dichtung an den Zylinder an einem Punkt wirken, der sich zwischen einem Viertel und einem Drittel der Länge des Kreisbogens mit Beginn am oberen die Dichtung tragenden Rand (107) befindet.

4. Vorrichtung gemäss Patentanspruch 1 oder 2, bei welcher die Dichtung an einer Platte befestigt ist, die ihrerseits mittels Scharnieren mit dem seitlichen Rand gegenüber einer geriffelten Walze verbunden ist, dadurch gekennzeichnet, dass die Dichtung aus einer Doppelbürste (250, 251) besteht, die sozusagen lotrecht zur Walze angeordnet ist.
